# EUROPÄISCHE PATENTSCHRIFT

(11) **EP 1 730 886 B1**
(45) Veröffentlichungstag und Bekanntmachung des Hinweises auf die Patenterteilung: **19.09.2007**
(21) Anmeldenummer: 05716892.4
(22) Anmeldetag: 03.03.2005
(51) Int. Cl.: H04L 12/24, H04Q 7/34

(54) **VERFAHREN UND EINRICHTUNGEN ZUR VERTEILUNG VON MANAGEMENT-INFORMATIONEN IN EINEM MANAGEMENTNETZ EINES KOMMUNIKATIONSSYSTEMS**
METHOD AND DEVICES FOR DISTRIBUTING MANAGEMENT INFORMATION IN A MANAGEMENT NETWORK OF A COMMUNICATIONS SYSTEM
PROCEDES ET DISPOSITIFS DE DISTRIBUTION D'INFORMATIONS DE GESTION DANS UN RESEAU DE GESTION D'UN SYSTEME DE COMMUNICATION

(30) Priorität: 30.03.2004 DE 102004015558
(43) Veröffentlichungstag der Anmeldung: 13.12.2006
(73) Patentinhaber: NOKIA SIEMENS NETWORKS GMBH & CO. KG, 81541 München (DE)
(72) Erfinder: HIRSCH, Lucian, 81373 München (DE)
(86) Internationale Anmeldenummer: PCT/EP2005/050934
(87) Internationale Veröffentlichungsnummer: WO 2005/096549

(56) Entgegenhaltungen:
- US-A1- 2002 124 066
- US-A1- 2003 162 537
- US-B1- 6 351 213

## Beschreibung

Die Erfindung betrifft ein Verfahren zur Verteilung von Management-Informationen in einem Managementnetz zur Netzüberwachung und -kontrolle eines Kommunikationssystems nach dem Oberbegriff des Anspruchs 1.

Die Erfindung betrifft ferner eine Netzwerkeinrichtung in der Funktion als Agent in einem Managementnetz zur Netzüberwachung und -kontrolle eines zellularen Kommunikationssystems nach dem Oberbegriff des Anspruchs 9, eine Netzwerkmanagementeinrichtung in der Funktion als Manager in einem Managementnetz zur Netzüberwachung und -kontrolle eines zellularen Kommunikationssystems nach dem Oberbegriff des Anspruchs 10, sowie ein Kommunikationssystems mit entsprechenden Netzwerkeinrichtungen und Netzwerkmanagementeinrichtungen.

Die Prinzipien eines Managementnetzes, die auch als TMN-Prinzipien (TMN: Telecommunications Management Network) bezeichnet werden, definieren mehrere Managementschichten für das Management eines Kommunikationssystems - beispielsweise eines Mobil-Kommunikationssystems -, wobei jede Schicht mit Ausnahme der obersten und untersten Schicht eine doppelte Funktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine Agenten-Funktion für die nächsthöhere Schicht zu.

Die ITU-T Standards der Serie X.73x definieren für das Management von Telekommunikations-Netzen verschiedene "Systems Management Functions", die von Applikationsprozessen in einer zentralisierten oder dezentralisierten Management-Umgebung benutzt werden können.

Die Manager-Agent-Kommunikation erfolgt über sogenannte Management-Schnittstellen bzw. Manager-Agent-Schnittstellen, die in einer objekt-orientierten Umgebung durch ein Kommunikationsprotokoll (z.B. CMIP (Common Management Information Protocol nach ITU-T X.711) oder CORBA (Common Object Request Broker Architecture)) und ein Objektmodell gekennzeichnet werden können.

Solche Schnittstellen gibt es beispielsweise zwischen einerseits der Elementmanagementebene (Element Management Level) und andererseits der Netzwerkelementebene (Network Element Level). Ein Beispiel für Netzeinrichtungen zu dieser Schnittstelle (OMC-BSS-Schnittstelle) stellen etwa die Betriebs- und Wartungszentren (OMC Operation and Maintenance Center) auf Seite der Elementmanagementebene (Element Management Level) und die Basisstationen beispielsweise des Basisstationssystem (BSS Base Station System) in einem GSM Mobilfunk-Netz auf der Seite der Netzwerkelementebene (Network Element Level) dar. Die Basisstationen eines GSM Netzes der zweiten Generation sind hier beispielsweise genannt. Im Rahmen der vorliegenden Erfindung können auch Basisstationen anderer Kommunikationsnetze, beispielsweise Node B eines UMTS Mobilfunknetzes (UMTS Universal Mobile Telecommunication System) oder Funkzugangspunkte eines WLAN-Systems (WLAN Wireless Local Area Network) beispielsweise zu einem der IEEE 812.11-Standards betroffen sein.

Das Dokument US 2003 162537 offenbart ein Verfahren zur Verteilung von Management - Informationen in einem Managementnetz zur Netzüberwachung und -kontrolle eines Kommunikationssystems, wobei das Managementnetz Manager "NMC" und Agenten "OMC1-3" als Einrichtungen in verschiedenen Managementebenen umfasst, wobei Management - Informationen als Ereignismeldungen zwischen diesen Einrichtungen des Managementnetzes übermittelt werden.

Management-Schnittstellen bzw. Manager-Agent-Schnittstellen existieren aber insbesondere auch zwischen einerseits der Netzwerkmanagementebene (Network Management Level) und andererseits der Netzwerkelementmanagementebene (Network Element Management Level). Diese Schnittstellen stehen im Fokus der vorliegenden Erfindung. Ein Beispiel für Netzeinrichtungen zu diesen Schnittstellen (NMC-OMC-Schnittstellen bzw. NM-EM-Schnittstellen) stellen etwa die Netzwerkmanagementzentren (NMC Network Management Center) auf der Seite der Netzwerkmanagementebene (Network Management Level) und die Betriebs- und Wartungszentren (OMC Operation and Maintenance Center) auf der Seite der Elementmanagementebene (Element Management Level) z.B. im genannten GSM oder einem anderen Mobilfunk-Netz dar.

Dienste (*services*) innerhalb des Managementnetzes, die beispielsweise eine Änderung der Struktur und damit des Verhaltens eines Telekommunikations-Netzes durch den Operator ermöglichen, beziehen sich in der Regel auf Instanzen von gemanagten Objekten (*Managed Objects*), die in einer objekt-orientierten Umgebung Netzressourcen modellieren und insgesamt die netzspezifische Managementinformationsbasis (MIB Management Information Base) bilden.

Eine zelullare Struktur ist ein Grundprinzip für die Konfiguration des Radio-Subsystems eines zumindest über Bereiche flächendeckenden Mobilfunk-Netzes. Voraussetzung für die Funktionalität eines Mobilfunk-Netzes ist die korrekte Definition von Beziehungen zwischen benachbarten Zellen, auch angrenzende Zellen (*"adjacent cells"*) genannt.

Aus "Management Information"-Sicht werden solche Beziehungen mit Hilfe von zwei Objektkategorien grundsätzlich definiert:
- *Cell:* eine Instanz dieser gemanagten Objektklassen (MOC *Managed Object Class*) definiert eine (Referenz-)Zelle in einem Mobilfunk-Netz.
- *AdjacentCell*: eine Instanz dieser gemanagten Objektklassen (MOC) definiert eine Nachbarzelle, die bezogen auf die *Referenz-Zelle* für Handover- und/oder Reselection-Zwecke benutzt werden kann.

Zusammenfassend lässt sich festhalten, dass komplexe Telekommunikationsnetze (wie z.B. Mobilfunk-Netze) üblicherweise Management-Hierarchien verwenden, in denen Element-Manager (OMC-Systeme) die Agent-Rolle und Netzwerk-Manager (NMC-Systeme) die Manager-Rolle spielen. Sowohl in Netzwerkmanagementzentren (NMC) als auch in Betriebs- und Wartungszentren (OMC) werden Operationen durchgeführt und Management-Informationen verarbeitet und gespeichert.

In einer Multi-Manager-Umgebung muss jeder Agent in der Lage sein, unter Umständen parallel laufende Anforderungen von mehreren Managern zu bearbeiten. Ein Manager kann seine Funktion nur dann optimal erfüllen, wenn alle relevanten Ereignismeldungen (sogenannte "*event reports*") aus den untergeordneten Agenten empfangen werden. Unter Normalbedingungen, d.h. wenn die Kommunikation zwischen einem Agent und den übergeordneten Managern korrekt funktioniert, geschieht dies über einen sogenannten Event Reporting-Mechanismus. Dessen Aufgabe ist es, nur diejenigen Ereignismeldungen zum Manager zu routen, welche bestimmten Filterkriterien genügen.

Für einen effizienten Netzbetrieb ist die Sicherstellung der Konsistenz von Management-Informationen auch bei Ausfall einzelner NM-EM-Schnittstellen gerade in einer hierarchischen Multi-Manager-Konfiguration von großer Bedeutung.

Der Erfindung liegt daher die Aufgabe zugrunde, ein Verfahren, Netzeinrichtungen und ein Kommunikationssystem der eingangs genannten Art aufzuzeigen, durch welche die Möglichkeit einer wirksamen Verteilung von Management-Informationen an alle betroffenen Management-Systeme (insbesondere in der eine Art "broadcasting"-Funktionalität) über NM-EM-Schnittstellen zur Verfügung gestellt werden kann.

Diese Aufgabe wird gemäß der Erfindung hinsichtlich des Verfahrens durch die Merkmale des Patentanspruchs 1, hinsichtlich der Netzwerkeinrichtung durch die Merkmale des Patentanspruchs 9, hinsichtlich der Netzwerkmanagementeinrichtung durch die Merkmale des Patentanspruchs 10 gelöst und hinsichtlich des Kommunikationssystems durch die Merkmale des Patentanspruchs 12 gelöst. Vorteilhafte Weiterbildungen und Ausgestaltungen der Erfindung sind den abhängigen Ansprüchen zu entnehmen.

Erfindungsgemäß werden in jedem als Netzwerkmanager fungierenden Manager gemeinsame Ressourcen des Kommunikationssystems in einer objekt-orientierten Management-Hierarchie gekennzeichnet und Management-Informationen als Ereignismeldungen an alle von einem Ereignis betroffenen, als Netzwerkmanager oder als Elementmanager fungierenden Einrichtungen des Managementnetzes unter Nutzung der Kennzeichnung gemeinsamer Ressourcen und der Schnittstelle zwischen Manager und Agent übermittelt.

Dies bedeutet für den Fall von Netzwerkmanagementzentren (NMC) als Manager und die Betriebs- und Wartungszentren (OMC) als Agenten, dass Management-Informationen als Ereignismeldungen an alle von einem Ereignis betroffenen, als Netzwerkmanager fungierenden Netzwerkmanagementzentren (NMC) und/oder als Elementmanager fungierenden Betriebs- und Wartungszentren (OMC) des Managementnetzes unter Nutzung der Kennzeichnung gemeinsamer Ressourcen und der NM-EM-Schnittstelle zwischen Netzwerkmanagementzentrum (NMC) und Betriebs- und Wartungszentrum (OMC) übermittelt werden.

Die Schnittstelle zur Manager-Agent-Beziehung zwischen einem Netzwerkmanagementzentrum (NMC) und einem Betriebs- und Wartungszentrum (OMC) kann mit Vorteil als Echtzeit-Schnittstelle ausgebildet sein. Auf diese Weise kann die Konsistenz von Management-Informationen zwischen Zellen in benachbarten Netzregionen mit Hilfe der Echtzeit-Schnittstelle (real-time OMC-NMC Management-Schnittstelle) sichergestellt werden.

Grundbestandteil für das erfindungsgemäße Verfahren ist die Verwaltung und Kennzeichnung von sogenannten gemeinsamen Ressourcen ("*common ressources*") in jedem Netzwerkmanager (NMC). In einer objekt-orientierten Management-Hierarchie werden damit Ressourcen des Telekommunikationsnetzes bezeichnet, die in benachbarten Netzregionen durch Instanzen von unterschiedlichen Objektklassen verwaltet werden.
Beispielhaft kann hierzu die Modellierung einer einzigen Zelle in einem Mobilfunk-Netz als Referenz-Zelle in einer OMC-Region (eine Instanz der Objektklasse *cell*) und als Nachbarzellen für die angrenzenden OMC-Regionen (mehrere Instanzen der Objektklasse *adjacentCell)* betrachtet werden.

Die unterschiedlichen Objektinstanzen einer konkreten Netzressource erhalten in Ausgestaltung der Erfindung eine identische Kennzeichnung, den sogenannten *symbolischen Namen,* der eine von Operator definierte, netzweit gültige Kennung darstellt und durch das standardisierte Attribut (ITU-T M.3100) *userLabel* modelliert werden kann. Es kann folglich im erfindungsgemäßen Verfahren insbesondere vorgesehen sein, dass die Kennzeichnung einer gemeinsamen Ressource des Kommunikationssystems mit Hilfe einer Vergabe eines symbolischen Namens als innerhalb des Kommunikationssystems geltende Kennung erfolgt.

Es können vorteilhafterweise in jedem als Netzwerkmanager fungierenden Manager (NMC) Informationen über die Zuordnung des symbolischen Namens zu mindestens einer entsprechenden Objektinstanz in der objekt-orientierten Management-Hierarchie vorgehalten werden. Aufgrund dieser Zuordnungsinformationen kann auf verhältnismäßig einfache Art und Weise ermittelt werden, an welche Einrichtungen des Managementnetzes die Ereignismeldungen verteilt werden sollen.

Die Management-Informationen als Ereignismeldungen können von einem Agenten (Betriebs- und Wartungszentrum OMC) als ursprünglichem Versender oder von einem Manager (Netzwerkmanagementzentrum NMC) als ursprünglichem Versender an die Einrichtungen (NMC bzw. OMC) des Managementnetzes übermittelt werden. Wenn die Ereignismeldungen ihren Ursprung auf der Elementmanager-Ebene (EM Level) der Betriebs- und Wartungszentren (OMC) haben, wird die Verteilung der Management-Informationen begonnen mit einer Übermittlung von dem betreffenden Betriebs- und Wartungszentrum (OMC) an die angeschlossenen Netzwerkmanagementzentren (NMC). Es werden folglich die Management-Informationen als Ereignismeldungen von zumindest einem Agenten (OMC) an die angeschlossenen Manager (NMC) des Managementnetzes übermittelt.

Wenn die Ereignismeldungen ihren Ursprung auf der Netzwerkmanager-Ebene (NM Level) der Netzwerkmanagementzentren (NMC) haben, wird die Verteilung der Management-Informationen begonnen mit einer Übermittlung von dem betreffenden NMC an die angeschlossenen Betriebs- und Wartungszentren (OMC). Es werden dann Management-Informationen als Ereignismeldungen von zumindest einem Manager (NMC) an die angeschlossenen Agenten (OMC) des Managementnetzes übermittelt.

In Weiterbildung der Erfindung wird ein mehrfaches Versenden von identischen Ereignismeldungen vermieden, indem jeder Manager (NMC) und jeder Agent (OMC) eine bereits empfangene Ereignismeldung bei erneutem Empfang ignoriert und nicht wiederholt an angeschlossene Einrichtungen (NMC bzw. OMC) des Managementnetzes weiterleitet. Auf diese Weise wird ein unnötiges Versenden von Ereignismeldungen wirksam unterbunden.

Eine Verteilung der Management-Informationen lässt sich vor dem Hintergrund der beschriebenen Maßnahmen auf verhältnismäßig einfache Art und Weise automatisieren. Es erfolgt eine bidirektionalen Verteilung von Management-Informationen an alle betroffenen Management-Systeme über NM-EM-Schnittstellen, d.h. eine Art "broadcasting"-Funktionalität wird verfügbar gemacht. Neben der Redundanz der Kommunikationsverbindungen kann damit die Konsistenz von Management-Informationen sowohl hierarchisch (zwischen OMCs und NMCs) als auch auf horizontaler Ebene (z.B. zwischen benachbarten OMCs) sichergestellt werden.

In jedem als Netzwerkmanager fungierenden Manager (NMC) können die Informationen über die Zuordnung des symbolischen Namens zu mindestens einer entsprechenden Objektinstanz in der objekt-orientierten Management-Hierarchie in Form einer Tabelle gespeichert werden. Jedesmal nach Aufbau einer NM-EM-Verbindung führt das NM-System eine Synchronisierung der Konfigurationsdaten durch. Damit baut jedes Netzwerkmanagerzentrum (NMC) eine eigene Tabelle auf, deren Zeilen jeweils die Zuordnung zwischen einem symbolischen Namen und der entsprechenden Objektinstanz (*distinguished name*) enthalten. Eine gemeinsame Ressource ("common ressource") wird erkannt, wenn in einer Tabellenzeile mehrere Instanzen (unterschiedlicher Objektklassen) genau einem symbolischen Namen zugeordnet werden.

Die Erfindung geht davon aus, dass eine Netzwerkeinrichtung (Betriebs- und Wartungszentrum OMC) in der Funktion als Agent in einem Managementnetz zur Netzüberwachung und -kontrolle eines zellularen Kommunikationssystems für zumindest eine Manager-Agent-Beziehung zwischen einem Manager (Netzwerkmanagerzentrum NMC) einer Netzwerkmanagementebene (NM Level) und der Netzwerkeinrichtung (Betriebs- und Wartungszentrum OMC) als Agent der Elementmanagementebene (EM Level) ausgebildet ist. Erfindungsgemäß sind Mittel zum Übermitteln von Management-Informationen als Ereignismeldungen an alle von einem Ereignis betroffenen, als Netzwerkmanager fungierenden Einrichtungen (Netzwerkmanagerzentrum NMC) des Managementnetzes unter Nutzung der Kennzeichnung gemeinsamer Ressourcen und der Schnittstelle (NM-EM-Schnittstelle) zwischen Manager (Netzwerkmanagerzentrum NMC) und Agent (Betriebs- und Wartungszentrum OMC) vorgesehen.

In der Funktion als Manager in einem Managementnetz zur Netzüberwachung und -kontrolle eines zellularen Kommunikationssystems gibt es eine Netzwerkmanagementeinrichtung (Netzwerkmanagerzentrum NMC), die für zumindest eine Manager-Agent-Beziehung zwischen der Netzwerkmanagementeinrichtung (NMC) einer Netzwerkmanagementebene (NM LEVEL) und einer Netzeinrichtung (Betriebs- und Wartungszentrum OMC) als Agent der Elementmanagementebene (EM LEVEL) ausgebildet ist. Erfindungsgemäß sind Mittel zum Übermitteln von Management-Informationen als Ereignismeldungen an alle von einem Ereignis betroffenen, als Netzwerkelementmanager fungierenden Einrichtungen (Betriebs- und Wartungszentrum OMC) des Managementnetzes unter Nutzung der Kennzeichnung gemeinsamer Ressourcen und der Schnittstelle (NM-EM-Schnittstelle) zwischen Manager (Netzwerkmanagerzentrum NMC) und Agent (Betriebs- und Wartungszentrum OMC) vorgesehen.

Ferner können in der Netzwerkmanagementeinrichtung (Netzwerkmanagerzentrum NMC) erfindungsgemäß Mittel zum Speichern von Informationen über die Zuordnung des symbolischen Namens zu mindestens einer entsprechenden Objektinstanz in der objekt-orientierten Management-Hierarchie vorhanden sein.

Ein erfindungsgemäßes Kommunikationssystem mit einem Managementnetz zur Netzüberwachung und -kontrolle des zellularen Kommunikationssystems umfasst als Einrichtungen in verschiedenen Managementebenen (EM LEVEL, NM LEVEL) sowohl erfindungsgemäße Netzwerkeinrichtungen (Betriebs- und Wartungszentrum OMC) in der Funktion als Agenten als auch erfindungsgemäße Netzwerkmanagementeinrichtungen (Netzwerkmanagerzentrum NMC) in der Funktion als Manager.

Das erfindungsgemäße Verfahren ist grundsätzlich für alle Kommunikationsnetze und insbesondere Telekommunikationsnetze (insbesondere drahtlose, aber auch drahtgebundene) einsetzbar. In der Multi-Manager-Konfiguration liegen dabei eine Vielzahl von Managern und eine Vielzahl von Agenten vor.

Das Verfahren ist grundsätzlich für alle Arten von Manager-Agent-Schnittstellen anwendbar. Es wird nachfolgend beispielhaft mit Ausführungen zu einer CMIP-basierten NMC-OMC-Schnittstelle erläutert. Das Verfahren ist jedoch bei Verwendung anderer Schnittstellen-Protokolle (z.B. SNMP oder CORBA) gleichermaßen bzw. entsprechend einsetzbar.

Nachstehend wird die Erfindung anhand von Ausführungsbeispielen unter Bezugnahme auf Figuren näher erläutert.

Es zeigen:
- Fig. 1: das grundsätzliches Blockschaltbild eines Managementnetzes für ein (Mobil)-Kommunikationssystem mit Agent-Manager-Beziehung zwischen Betriebs- und Wartungszentren und mehreren Netzwerkmanagementzentren,
- Fig. 2: ein Blockschaltbild eines beispielhaften Ausschnitts eines Managementnetzes für ein Kommunikationssystem mit Agent-Manager-Beziehung zwischen vier Betriebs- und Wartungszentren und vier Netzwerkmanagementzentren,
- Fig. 3: eine schematische Darstellung von Beispielen unterschiedlicher Wege für die Verteilung der Management-Informationen in Form von Ereignismeldungen für das Blockschaltbild von Figur 2,
- Fig. 4: eine schematische Darstellung eines beispielhaften Verteilweges der Management-Informationen in Form von Ereignismeldungen für das Blockschaltbild von Figur 2 bei Ausfall der Verbindung zwischen NMC₁ und OMC₂ ,
- Fig. 5: eine schematische Darstellung eines beispielhaften Verteilweges der Management-Informationen in Form von Ereignismeldungen für das Blockschaltbild von Figur 2 bei Ausfall der Verbindung zwischen OMC₁ und NMC₂ .

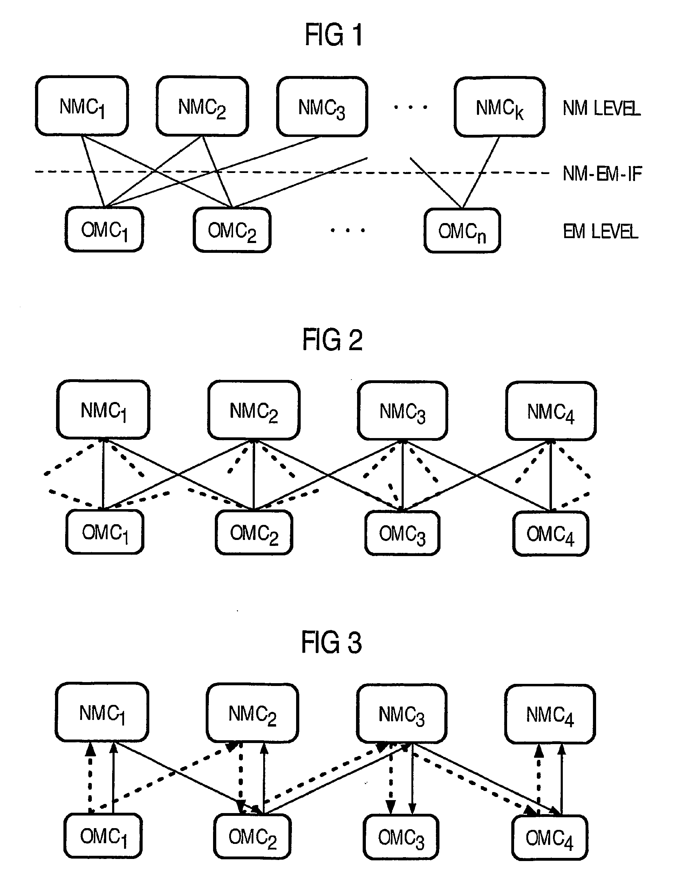

In Figur 1 ist das Blockschaltbild eines Managementnetzes für ein Mobil-Kommunikationssystem mit Agent-Manager-Beziehung zwischen Betriebs- und Wartungszentren OMC₁, OMC₂ bis OMCₙ (Operation and Maintenance Centers) und mehreren Netzwerkmanagementzentren NMC₁, NMC₂, NMC₃ bis NMCₙ (Network Management Centers) dargestellt. Dabei ist Figur 1 im vorliegenden Fall auf eine Darstellung mit zwei Ebenen NM LEVEL und EM LEVEL beschränkt. Nicht dargestellt ist beispielsweise eine Managementebene des Managementnetzes, welche die Netzeinrichtungsebene ("Network Element Level") mit mehreren Basisstationssystemen enthält.

Die Managementebenen EM LEVEL kennzeichnet die Netzelementmanagementebene ("Network Element Management Level"), in der Betriebs- und Wartungszentren OMC₁ , OMC₂ bis OMCₙ jeweils die üblicherweise herstellerspezifische Managernentfunktionalität für beispielsweise nicht in Figur 1 gezeigte einzelne Basisstationen des Basisstationssystems bereitstellen. Die Managementebene NM LEVEL kennzeichnet die Netzwerkmanagementebene ("Network Management Level"), in der Netzwerkmanagementzentren NMC₁, NMC₂, NMC₃ bis NMCₙ jeweils eine integrierte, gewöhnlich vom Hersteller unabhängige Management-Funktionalität realisieren. Dabei können mehrere Netzwerkmanagementzentren NMC einen Zugriff zu derselben Netzeinrichtung der nächstniedrigeren Managementebene EM LEVEL haben, im vorliegenden Beispiel beispielsweise die Netzmanagementzentren NMC₁ und NMC₂ der nächsthöheren Managementebene NM LEVEL zum Betriebs- und Wartungszentrum OMC₂ der nächstniedrigeren Managementebene EM LEVEL. Zwischen den Netzeinrichtungen unterschiedlicher Managementebenen mit den Betriebs- und Wartungszentren OMC₁ , OMC₂ bis OMCₙ auf der einen Seite und den Netzwerkmanagementzentren NMC₁, NMC₂, NMC₃ bis NMCₙ auf der anderen Seite sind definierte Schnittstellen NM-EM-IF (NM-EM-Interface) zur Informationsübertragung vorgesehen. Figur 1 zeigt eine Multi-Manager-Konfiguration eines Managementnetzes.

Im folgenden wird zunächst die Verteilung von Ereignismeldungen, deren Ursprung auf EM-Ebene EM LEVEL liegt, betrachtet.

Hier handelt es sich um Ereignismeldungen, die entweder spontan in Betriebs- und Wartungszentren OMC oder zugehörigen Netzwerkelementen aufgetreten sind oder durch eine Operatoraktion ausgelöst wurden, z.B:
- Alarme
- Alarmbestätigung (*alarm acknowledgement notification* gemäß 3GPP TS 32.111)
- Manuelle Alarmlöschung (*alarm clearing notification* gemäß 3GPP TS 32.111)
- Änderung von Attributwerten.

Für die Verteilung von Ereignismeldungen von einem Betriebs- und Wartungszentrum OMC an die angeschlossenen Netzwerkmanagementzentren NMC wird vorausgesetzt, dass an jeder NM-EM-Schnittstelle NM-EM-IF das Netzwerkmanagementzentrum NMC einen Filtermechanismus (z.B. in Form eines EFD Event Forwarding Discriminators) im Betriebs- und Wartungszentrum OMC eingerichtet und die Filterkriterien festgelegt hat.

Jede Ereignismeldung (z.B. M-EVENT-REPORT im Falle einer CMIP-basierten NM-EM-Schnittstelle) wird vom Betriebs- und Wartungszentrum OMC an alle NMC-eigenen Filtermechanismen weitergeleitet. Dadurch kann jedes Netzwerkmanagementzentrum NMC den Informationsfluss nach seinen individuellen Anforderungen steuern, d.h. aus Sicht des Netzwerkmanagementzentrum NMC unerwünschte Meldungen werden schon im Betriebs- und Wartungszentrum OMC ausgefiltert.

Die Weiterverteilung der von einem Netzwerkmanagementzentrum NMC empfangenen Ereignismeldungen an andere Betriebs- und Wartungszentren OMC erfolgt folgendermaßen: Nach Empfang einer Ereignismeldung überprüft jedes Netzwerkmanagementzentrum NMC, ob die Objektinstanz (auf die sich die aktuelle Ereignismeldung bezieht) in der Tabelle der Konfigurationsdaten als gemeinsame Ressource ("*common ressource*") vorhanden ist.

Wenn das der Fall ist, dann ist die Ereignismeldung auch für andere, benachbarte Betriebs- und Wartungszentren OMC von Bedeutung. Das Netzwerkmanagementzentrum NMC sendet für jede weitere Objektinstanz dieser Tabellenzeile eine entsprechende Anforderung (z.B. M-ACTION bzw. M-SET im Falle einer CMIP-basierten NM-EM-Schnittstelle) an das jeweilige angeschlossene Betriebs- und Wartungszentrum OMC.

In einem Beispiel wird eine Management-Hierarchie mit mehreren EM- und NM-Systemen angenommen, wobei nur die benachbarten EM-Systeme OMC₁, OMC₂, OMC₃, OMC₄ hier relevant sind. Ein solches Szenario ist in Figur 2 schematisch dargestellt. Figur 2 zeigt ein Blockschaltbild eines Ausschnitts eines Managementnetzes für ein Kommunikationssystem mit Agent-Manager-Beziehung zwischen vier Betriebs- und Wartungszentren OMC₁, OMC₂, OMC₃ und OMC₄ und vier Netzwerkmanagementzentren NMC₁, NMC₂, NMC₃ und NMC₄. Neben mit durchgezogenen Linien gezeichneten Verbindungen von Netzwerkmanagementzentren NMC₁, NMC₂, NMC₃ und NMC₄ und Betriebs- und Wartungszentren OMC₁, OMC₂, OMC₃ und OMC4 ist mit gepunktet dargestellten Linien Verbindungen zu weiteren möglicherweise vorhandenen, aber in Figur 2 nicht dargestellten Netzeinrichtungen (NMC bzw. OMC) in den Ebenen NM LEVEL und EM LEVEL angedeutet.

In der vom Betriebs- und Wartungszentrum OMC₁ überwachten Netzregion wird eine Referenz-Zelle (*cell₁*) definiert. Diese Zelle ist gleichzeitig Nachbarzelle für die von Betriebs- und Wartungszentren OMC₂, OMC₃ und OMC₄ überwachten Netzregionen und entsprechend definiert (*adjacentCell₂₁ , adjacentCell₃₁ , adjacentCell₄₁*).

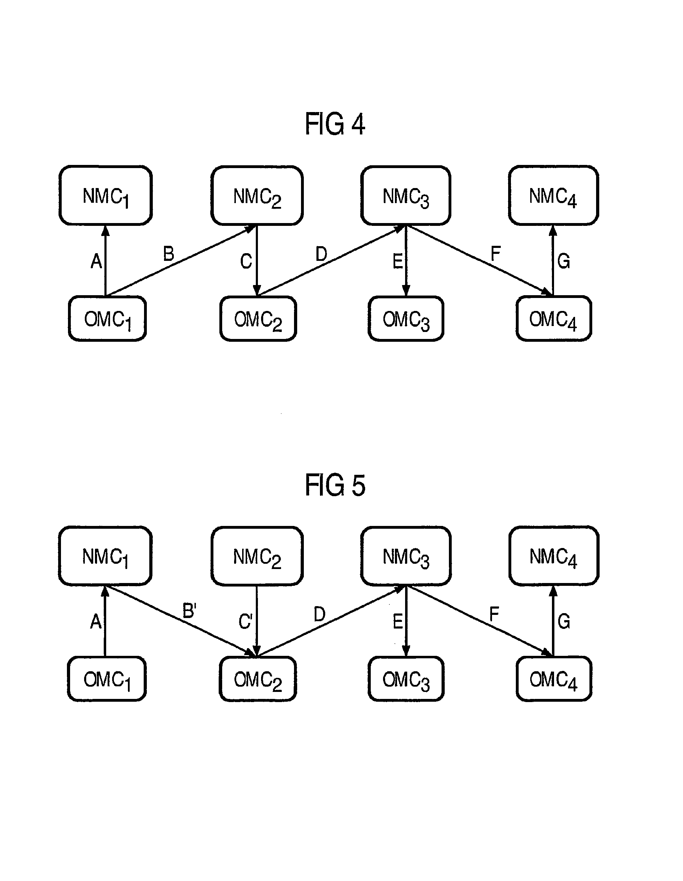

Figur 3 zeigt eine schematische Darstellung von Beispielen unterschiedlicher Wege für die Verteilung der Management-Informationen in Form von Ereignismeldungen für das Blockschaltbild von Figur 2.

Ein Alarm der Objektinstanz *cell₁* tritt auf und eine entsprechende Alarmmeldung wird vom Betriebs- und Wartungszentrum OMC₁ an die angeschlossenen Netzwerkmanagementzentren NMC₁ ("Broadcasting"-Weg 1, durchgezogene Pfeile im Figur 3) und NMC₂ ("Broadcasting"-Weg 2, unterbrochene Pfeile im Figur 3) gesendet.

Ein erster Verteilungsweg der Management-Information in Form von Ereignismeldungen ("Broadcasting"-Weg 1) führt über das Netzwerkmanagementzentrum NMC₁, das auch mit dem Betriebs- und Wartungszentrum OMC₂ kommuniziert: Anhand der eigenen Tabelle zu gemeinsamen Ressourcen ("common ressources") erkennt das Netzwerkmanagementzentrum NMC₁ die Beziehung zwischen den Instanzen *cel₁₁* und *adjacentCell₂₁* und leitet eine "Alarm"-Mitteilung an das angeschlossene Betriebs- und Wartungszentrum OMC₂ weiter. Hier wird der Alarm (für die Instanz *adjacentCell₂₁* ) in die eigene Alarmliste eingetragen und anschließend als Alarm-Notifikation an alle anderen angeschlossenen NMC-Systeme (Netzwerkmanagementzentren NMC₂ und NMC₃) weitergeleitet. Das Netzwerkmanagementzentrum NMC₂ hat den Alarm vom Betriebs- und Wartungszentrum OMC₁ bereits empfangen, weshalb die Alarm-Notifikation von Betriebs- und Wartungszentrum OMC₂ ignoriert wird.

Das Netzwerkmanagementzentrum NMC₃, das den Alarm von Betriebs- und Wartungszentrum OMC₂ empfangen hat und zusätzlich mit den Betriebs- und Wartungszentren OMC₃ und OMC₄ kommuniziert, erkennt in der eigenen Tabelle zu gemeinsamen Resourcen ("common ressources") die Beziehung zwischen den Objektinstanzen *adjacentCell₂₁ , adjacentCell₃₁* und *adjacentCell₄₁* und leitet eine "Alarm"-Mitteilung an die anderen angeschlossenen Betriebs- und Wartungszentren OMC₃ und OMC₄ weiter.

In Betriebs- und Wartungszentrum OMC₃ wird der Alarm (für die Instanz *adjacentCell₃₁* ) in die Alarmliste eingetragen.
Das Betriebs- und Wartungszentrum OMC₄ trägt seinerseits den Alarm (für die Instanz *adjacentCell₄₁* ) in die eigene Alarmliste ein und sendet anschließend eine Alarm-Notifikation an das angeschlossene Netzwerkmanagementzentrum NMC₄ weiter. Damit haben alle betroffenen Management-Systeme vom Alarm in der Zelle *cell1* Kenntnis genommen.

Eine ähnliche Weiterleitung des Alarms läuft über einen zweiten Verteilweg ("Broadcasting"-Weg 2, unterbrochene Pfeile im Figur 3) über das Netzwerkmanagementzentrum NMC₂.

Aus Figur 3 ist erkennbar, dass die bidirektionale "broad-casting"-Funktionalität eine Verdoppelung der Nachrichtenübertragung verursachen könnte. Die mehrfache Sendung von gleichen Ereignismeldungen kann aber dadurch vermieden werden, dass jedes Management-System im Managementnetz eine schon vorher empfangene Meldung nicht weiterleitet, sondern einfach ignoriert (so wie NMC₂ den Alarm von OMC₂ - siehe Ausführungen oben - ignoriert).

Auf der anderen Seite ist die vorhandene Redundanz wichtig, um die Konsistenz der Management-Informationen auch dann sicherzustellen, wenn eine Verbindung zwischen Netzwerkmanagementzentrum und Betriebs- und Wartungszentrum (NM-EM-Verbindung) ausgefallen ist.

Figur 4 zeigt eine schematische Darstellung eines beispielhaften Verteilweges der Management-Informationen in Form von Ereignismeldungen für das Blockschaltbild von Figur 2 bei Ausfall der Verbindung zwischen Netzwerkmanagementzentrum NMC₁ und Betriebs- und Wartungszentrum OMC₂. Figur 4 veranschaulicht die Weitersendung des oben genannten Alarms, wenn die Verbindung zwischen Netzwerkmanagementzentrum NMC₁ und Betriebs- und Wartungszentrum OMC₂ ausgefallen ist. Dies entspricht der Weiterleitung des Alarms über einen zweiten Verteilweg ("Broadcasting"-Weg 2, unterbrochene Pfeile) in Figur 3. Im einzelnen umfasst der Verteilweg der Ereignismeldung bzw. Alarmmeldung folgende Verbindungen:
Verbindung (bzw. Übermittlungsweg) A: von OMC₁ zu NMC₁,
Verbindung (bzw. Übermittlungsweg) B: von OMC₁ zu NMC₂,
Verbindung (bzw. Übermittlungsweg) C: von NMC₂ zu OMC₂,
Verbindung (bzw. Übermittlungsweg) D: von OMC₂ zu NMC₃,
Verbindung (bzw. Übermittlungsweg) E: von NMC₃ zu OMC₃,
Verbindung (bzw. Übermittlungsweg) F: von NMC₃ zu OMC₄,
Verbindung (bzw. Übermittlungsweg) G: von OMC₄ zu NMC₄.

Figur 5 zeigt eine schematische Darstellung eines anderen beispielhaften Verteilweges der Management-Informationen in Form von Ereignismeldungen für das Blockschaltbild von Figur 2 bei Ausfall der Verbindung zwischen Betriebs- und Wartungszentrum OMC₁ und Netzwerkmanagementzentrum NMC₂. Figur 5 gibt ebenfalls die Weitersendung des oben genannten Alarms wieder, nämlich für den Fall, dass die Verbindung zwischen Betriebs- und Wartungszentrum OMC₁ und Netzwerkmanagementzentrum NMC₂ ausgefallen ist. Dies entspricht der Weiterleitung des Alarms über einen ersten Verteilweg ("Broadcasting"-Weg 1, durchgezogen Pfeile) in Figur 3. Im einzelnen umfasst der Verteilweg der Ereignismeldung bzw. Alarmmeldung folgende Verbindungen:
Verbindung (bzw. Übermittlungsweg) A: von OMC₁ zu NMC₁,
Verbindung (bzw. Übermittlungsweg) B': von NMC₁ zu OMC₂,
Verbindung (bzw. Übermittlungsweg) C': von OMC₂ zu NMC₂,
Verbindung (bzw. Übermittlungsweg) D: von OMC₂ zu NMC₃,
Verbindung (bzw. Übermittlungsweg) E: von NMC₃ zu OMC₃,
Verbindung (bzw. Übermittlungsweg) F: von NMC₃ zu OMC₄,
Verbindung (bzw. Übermittlungsweg) G: von OMC₄ zu NMC₄.

Neben der Verteilung von Ereignismeldungen, deren Ursprung auf EM-Ebene EM LEVEL liegt, kann es zu einer Verteilung von Ereignismeldungen kommen, deren Ursprung auf NM-Ebene NM LEVEL liegt.

Hier handelt es sich um Ereignismeldungen, die durch eine O-peratoraktion am Netzwerkmanagementzentrum NMC ausgelöst werden, z.B.:
- Alarmbestätigung (*alarm acknowledgement operation* gemäß 3GPP TS 32.111)
- Manuelle Alarmlöschung (*alarm clearing operation* gemäß 3GPP TS 32.111)
- Änderung von Attributwerten.

Beispielhaft wäre hier die Änderung eines Handover-Attributes in der Zelle *cell₁* durch den Operator am Netzwerkmanagementzentrum NMC₁. Da dieser Parameter auch für die Objektinstanzen *adjacentCell₂₁ , adjacentCell₃₁ , adjacentCell₄₁* relevant ist, muss die Änderung in allen benachbarten OMC-Regionen bekanntgemacht werden. Die Verteilung ("broadcast"-Funktionalität) läuft ähnlich wie oben beschrieben ab, allerdings ist diesmal das Netzwerkmanagementzentrum NMC₁ der Ausgangspunkt. Dies würde bedeuten, das sich in den Figuren 4 und 5 die Verteilung über den Weg A in der Richtung umkehren würde vom Netzwerkmanagementzentrum NMC₁ zum Betriebs- und Wartungszentrum OMC₁.

Die Beschreibung des Verfahrensbeispiels erfolgte anhand einer Q3 (CMIP-basierten)-Schnittstelle. Die Erfindung ist aber auch auf andere Schnittstellen wie beispielsweise CORBAbasierte Schnittstellen entsprechend anwendbar.

Zusammenfassend lassen sich folgende Eigenschaften des erfindungsgemäßen Verfahrens bzw. der Erfindung im allgemeinen festhalten:
- Das Verfahren erlaubt eine automatische Aktualisierung von Management-Informationen sowohl zwischen OMCs und NMCs als auch zwischen benachbarten OMCs.
- Die Datenkonsistenz über alle EM- und NM-Systeme (Betriebs- und Wartungszentren OMC und Netzwerkmanagementzentren NMC) hinweg wird auch beim Ausfall einzelner NM-EM-Verbindungen sichergestellt.
- Das Verfahren ist grundsätzlich für alle Telekommunikationsnetze einsetzbar.

## Patentansprüche

1. Verfahren zur Verteilung von Management-Informationen in einem Managementnetz zur Netzüberwachung und -kontrolle eines Kommunikationssystems,
wobei das Managementnetz Manager (NMCᵢ) und Agenten (OMCᵢ) als Einrichtungen in verschiedenen Managementebenen (NM LEVEL, EM LEVEL) umfasst,
wobei Management-Informationen als Ereignismeldungen zwischen diesen Einrichtungen (NMCᵢ, OMCᵢ) des Managementnetzes übermittelt werden,
**dadurch gekennzeichnet,**
**dass** in jedem als Netzwerkmanager fungierenden Manager (NMCᵢ) gemeinsame Ressourcen des Kommunikationssystems, das heisst Ressourcen, die in benachbarten Netzregionen durch Instanzen von unterschiedlichen Objektklassen verwaltet werden, in einer objekt-orientierten Management-Hierarchie **gekennzeichnet** werden und Management-Informationen als Ereignismeldungen (A, B, C, D, E, F, G, B', C') an alle von einem Ereignis betroffenen, als Netzwerkmanager oder als Elementmanager fungierenden Einrichtungen (NMCᵢ, OMCᵢ) des Managementnetzes unter Nutzung der Kennzeichnung gemeinsamer Ressourcen und der Schnittstelle (NM-EM-IF) zwischen Manager (NMCᵢ) und Agent (OMCᵢ) übermittelt werden.

2. Verfahren nach Anspruch 1,
**dadurch gekennzeichnet,**
**dass** die Kennzeichnung einer gemeinsamen Ressource des Kommunikationssystems mit Hilfe einer Vergabe eines symbolischen Namens als innerhalb des Kommunikationssystems geltende Kennung erfolgt.

3. Verfahren nach Anspruch 2,
**dadurch gekennzeichnet,**
**dass** in jedem als Netzwerkmanager fungierenden Manager (NMCᵢ) Informationen über die Zuordnung des symbolischen Namens zu mindestens einer entsprechenden Objektinstanz in der objekt-orientierten Management-Hierarchie vorgehalten werden.

4. Verfahren nach einem der Ansprüche 1 bis 3,
**dadurch gekennzeichnet,**
**dass** Management-Informationen als Ereignismeldungen (A, B, C, D, E, F, G, B', C') von einem Agenten (OMCᵢ) als ursprünglichem Versender oder von einem Manager (NMCᵢ) als ursprünglichem Versender an die Einrichtungen (NMCᵢ, OMCᵢ) des Managementnetzes übermittelt werden.

5. Verfahren nach einem der Ansprüche 1 bis 4,
**dadurch gekennzeichnet,**
**dass** Management-Informationen als Ereignismeldungen (A, B, D, G) von zumindest einem Agenten (OMCᵢ) an die angeschlossenen Manager (NMCᵢ) des Managementnetzes übermittelt werden.

6. Verfahren nach einem der Ansprüche 1 bis 5,
**dadurch gekennzeichnet,**
**dass** Management-Informationen als Ereignismeldungen (C, E, F, B', C') von zumindest einem Manager (NMCᵢ) an die angeschlossenen Agenten (OMCᵢ) des Managementnetzes übermittelt werden.

7. Verfahren nach einem der Ansprüche 1 bis 6,
**dadurch gekennzeichnet,**
**dass** ein mehrfaches Versenden von identischen Ereignismeldungen (A, B, C, D, E, F, G, B', C') vermieden wird, indem jeder Manager (NMCᵢ) und jeder Agent (OMCᵢ) eine bereits empfangene Ereignismeldung bei erneutem Empfang ignoriert.

8. Verfahren nach einem der Ansprüche 3 bis 7,
**dadurch gekennzeichnet,**
**dass** in jedem als Netzwerkmanager fungierenden Manager (NMCi) Informationen über die Zuordnung des symbolischen Namens zu mindestens einer entsprechenden Objektinstanz in Form einer Tabelle gespeichert werden.

9. Netzwerkeinrichtung (OMCᵢ) in der Funktion als Agent in einem Managementnetz zur Netzüberwachung und -kontrolle eines zellularen Kommunikationssystems,
wobei die Netzeinrichtung (OMCᵢ) ausgebildet ist für zumindest eine Manager-Agent-Beziehung zwischen einem Manager (NMCᵢ) einer Netzwerkmanagementebene (NM LEVEL) und der Netzwerkeinrichtung (OMCᵢ) als Agent einer Elementmanagementebene (EM LEVEL),
**dadurch gekennzeichnet,**
**dass** Mittel zum Übermitteln von Management-Informationen als Ereignismeldungen (A, B, C, D, E, F, G, B', C') an alle von einem Ereignis betroffenen, als Netzwerkmanager fungierenden, Einrichtungen (NMCᵢ) des Managementnetzes unter Nutzung einer Kennzeichnung gemeinsamer Ressourcen, das heisst Ressourcen, die in benachbarten Netzregionen durch Instanzen von unterschiedlichen Objektklassen verwaltet werden, und der Schnittstelle (NM-EM-IF) zwischen Manager (NMCᵢ) und Agent (OMCᵢ) vorgesehen sind.

10. Netzwerkmanagementeinrichtung (NMCᵢ) in der Funktion als Manager in einem Managementnetz zur Netzüberwachung und - kontrolle eines zellularen Kommunikationssystems,
wobei die Netzwerkmanagementeinrichtung (NMCᵢ) ausgebildet ist für zumindest eine Manager-Agent-Beziehung zwischen der Netzwerkmanagementeinrichtung (NMCᵢ) einer Netzwerkmanagementebene (NM LEVEL) und einer Netzwerkeinrichtung (OMCᵢ) als Agent einer Elementmanagementebene (EM LEVEL),
**dadurch gekennzeichnet,**
**dass** Mittel zum Übermitteln von Management-Informationen als Ereignismeldungen (A, B, C, D, E, F, G, B', C') an alle von einem Ereignis betroffenen, als Netzwerkelementmanager fungierenden Einrichtungen (OMCᵢ) des Managementnetzes unter Nutzung einer Kennzeichnung gemeinsamer Ressourcen, das heisst Ressourcen, die in benachbarten Netzregionen durch Instanzen von unterschiedlichen Objektklassen verwaltet werden, und der Schnittstelle (NM-EM-IF) zwischen Manager (NMCᵢ) und Agent (OMCᵢ) vorgesehen sind.

11. Netzwerkmanagementeinrichtung (NMCᵢ) nach Anspruch 10,
**dadurch gekennzeichnet,**
**dass** Mittel zum Speichern von Informationen über die Zuordnung eines symbolischen Namens zu mindestens einer entsprechenden Objektinstanz in der objekt-orientierten Management-Hierarchie vorhanden sind.

12. Kommunikationssystem mit einem Managementnetz zur Netzüberwachung und -kontrolle eines zellularen Kommunikationssystems
umfassend als Einrichtungen in verschiedenen Managementebenen (EM LEVEL, NM LEVEL), sowohl Netzwerkeinrichtung (OMCᵢ) in der Funktion als Agent gemäß Anspruch 9 als auch Netzwerkmanagementeinrichtung (NMCᵢ) in der Funktion als Manager gemäß Anspruch 10 oder 11.

## Claims

1. Method for distributing management information in a management network for monitoring and controlling a communications system,
whereby the management network comprises managers (NMCᵢ) and agents (OMCᵢ) configured as devices on different management levels (NM LEVEL, EM LEVEL),
whereby management information is transmitted as event reports between these devices (NMCᵢ, OMCᵢ) of the management network, **characterised in that**,
in each manager (NMCᵢ) that functions as a network manager, common resources of the communications systems, in other words resources which are managed in neighbouring network regions by instances of different object classes, are identified in an object-oriented management hierarchy and management information is transmitted as event reports (A, B, C, D, E, F, G, B' , C' ) to all devices (NMCᵢ, OMCᵢ) of the management network that are affected by an event and that function as network managers or as element managers, using the identification of the common resources and the interface (NM-EM-IF) between the manager (NMCᵢ) and the agent (OMCᵢ).

2. Method according to claim 1,
**characterised in that**,
the identification of the common resources of the communications system is carried out by issuing a symbolic name as an identifier valid within the communications system.

3. Method according to claim 2,
**characterised in that**,
in each manager (NMCᵢ) that functions as a network manager, information about the allocation of the symbolic name for at least one corresponding object instance in the object-oriented management hierarchy is stored.

4. Method according to one of the claims 1 to 3,
**characterised in that**,
management information is transmitted as event reports (A, B, C, D, E, F, G, B', C') from an agent (OMCᵢ) as the original sender or from a manager (NMCᵢ) as the original sender to the devices (NMCᵢ, OMCᵢ) of the management network.

5. Method according to one of the claims 1 to 4,
**characterised in that**,
management information is transmitted as event reports (A, B, D, G) from at least one agent (OMCᵢ) to the connected managers (NMCᵢ) of the management network.

6. Method according to one of the claims 1 to 5,
**characterised in that**,
management information is transmitted as event reports (C, E, F, B' C') from at least one manager (NMCᵢ) to the connected agents (OMCᵢ) of the management network.

7. Method according to one of the claims 1 to 6,
**characterised in that**,
a multiple sending of identical event reports (A, B, C, D, E, F, G, B', C') is avoided by each manager (NMCᵢ) and each agent (OMCᵢ) ignoring an already received event report when it is received again.

8. Method according to one of the claims 3 to 7,
**characterised in that**,
the information about the allocation of the symbolic name for at least one corresponding object instance in each manager (NMCᵢ) functioning as a network manager is stored in the form of a table.

9. Network device (OMCᵢ) functioning as an agent in a management network for monitoring and controlling a cellular communications system,
whereby the network device (OMCᵢ) is designed for at least one manager-agent relationship between a manager (NMCᵢ) of a network management level (NM LEVEL) and of the network device (OMCᵢ) as agent of an element management level (EM LEVEL),
**characterised in that**,
means are provided for transmitting management information as event reports (A, B, C, D, E, F, G, B', C') to all devices (NMCᵢ) of the management network that are affected by an event and that function as network managers, using an identification of the common resources and the interface (NM-EM-IF) between the manager (NMCᵢ) and the agent (OMCᵢ).

10. Network management device (NMCᵢ) functioning as a manager in a management network for monitoring and controlling a cellular communications system,
whereby the network management device (NMCᵢ) is designed for at least one manager-agent relationship between the network management device (NMCᵢ) of a network management level (NM LEVEL) and a network device (OMCᵢ) as an agent of an element management level (EM LEVEL),
**characterised in that**,
means are provided for transmitting management information as event reports (A, B, C, D, E, F, G, B', C') to all devices (OMCᵢ) of the management network that are affected by an event and that function as network element managers, using an identification of the common resources, in other words, resources which are managed in neighbouring network regions by instances of different object classes, and the interface (NM-EM-IF) between the manager (NMCᵢ) and the agent (OMCᵢ).

11. Network management device (NMCᵢ) according to claim 10,
**characterised in that**,
means are available for storing information on the allocation of a symbolic name for at least one corresponding object instance in the object-oriented management hierarchy.

12. Communications system with a management network for monitoring and controlling a cellular communications system
comprising both a network device (OMCᵢ) functioning as an agent according to claim 9 and also a network management device (NMCᵢ) functioning as a manager according to claim 10 or 11 configured as devices on different management levels (EM LEVEL, NM LEVEL)

## Revendications

1. Procédé pour la distribution d'informations de gestion dans un réseau de gestion pour la surveillance et le contrôle de réseau d'un système de communication,
le réseau de gestion comprenant des gestionnaires (NMCᵢ) et des agents (OMCᵢ) comme dispositifs dans différents niveaux de gestion (NM LEVEL, EM LEVEL),
des informations de gestion étant transmises sous la forme de messages d'événement entre ces dispositifs (NMCᵢ, OMCᵢ) du réseau de gestion,
**caractérisé en ce que**
dans chaque gestionnaire (NMCᵢ) faisant office de gestionnaire de réseau, des ressources communes du système de communication, c'est-à-dire des ressources qui sont gérées dans des régions de réseau voisines par des instances de différentes classes d'objet, sont **caractérisées** dans une hiérarchie de gestion orientée objet et des informations de gestion sont transmises sous la forme de messages d'événement (A, B, C, D, E, F, G, B', C') à tous les dispositifs (NMCᵢ, OMCᵢ) concernés par un événement et faisant office de gestionnaire de réseau ou de gestionnaire d'élément, du réseau de gestion en utilisant la caractérisation de ressources communes et l'interface (NM-EM-IF) entre le gestionnaire (NMCᵢ) et l'agent (OMCᵢ).

2. Procédé selon la revendication 1,
**caractérisé en ce que**
la caractérisation d'une ressource commune du système de communication s'effectue à l'aide d'une attribution d'un nom symbolique comme code valable à l'intérieur du système de communication.

3. Procédé selon la revendication 2,
**caractérisé en ce que**
dans chaque gestionnaire (NMCᵢ) faisant office de gestionnaire de réseau, des informations concernant l'attribution du nom symbolique à au moins une instance d'objet correspondante sont fournies dans la hiérarchie de gestion orientée objet.

4. Procédé selon l'une quelconque des revendications 1 à 3,
**caractérisé en ce que**
des informations de gestion sont transmises sous la forme de messages d'événement (A, B, C, D, E, F, G, B', C') par un agent (OMCᵢ) en tant qu'expéditeur initial ou par un gestionnaire (NMCᵢ) en tant qu'expéditeur initial aux dispositifs (NMCᵢ, OMCᵢ) du réseau de gestion.

5. Procédé selon l'une quelconque des revendications 1 à 4,
**caractérisé en ce que**
des informations de gestion sont transmises sous forme de messages d'événement (A, B, D, G) par au moins un agent (OMCᵢ) aux gestionnaires raccordés (NMCᵢ) du réseau de gestion.

6. Procédé selon l'une quelconque des revendications 1 à 5,
**caractérisé en ce que**
des informations de gestion sont transmises sous forme de messages d'événement (C, E, F, B', C') par au moins un gestionnaire (NMCᵢ) aux agents (OMCᵢ) raccordés du réseau de gestion.

7. Procédé selon l'une quelconque des revendications 1 à 6,
**caractérisé en ce que**
un envoi multiple de messages d'événement (A, B, C, D, E, F, G, B', C') identiques est évité par le fait que chaque gestionnaire (NMCᵢ) et chaque agent (OMCᵢ) ignorent un message d'événement déjà reçu dans le cas d'une nouvelle réception.

8. Procédé selon l'une quelconque des revendications 3 à 7,
**caractérisé en ce que**,
dans chaque gestionnaire (NMCᵢ) faisant office de gestionnaire de réseau, des informations concernant l'attribution du nom symbolique à au moins une instance d'objet appropriée sont stockées sous forme d'un tableau.

9. Dispositif de réseau (OMCᵢ) dans la fonction d'agent dans un réseau de gestion pour la surveillance et le contrôle du réseau d'un système de communication cellulaire,
le dispositif de réseau (OMCᵢ) étant conçu pour au moins une relation gestionnaire-agent entre un gestionnaire (NMCᵢ) d'un niveau de gestion de réseau (NM LEVEL) et le dispositif de réseau (OMCᵢ) comme agent d'un niveau de gestion d'élément (EM LEVEL),
**caractérisé en ce que**
des moyens sont prévus pour la transmission d'informations de gestion sous forme de messages d'événement (A, B, C, D, E, F, G, B', C') à tous les dispositifs (NMCᵢ), concernés par un événement et faisant office de gestionnaire de réseau, du réseau de gestion en utilisant une caractérisation de ressources communes, c'est-à-dire des ressources qui sont gérées dans des régions de réseau voisines par des instances de classes d'objet différentes, et l'interface (NM-EM-IF) entre le gestionnaire (NMCᵢ) et l'agent (OMCᵢ).

10. Dispositif de gestion de réseau (NMCᵢ) dans la fonction de gestionnaire dans un réseau de gestion pour la surveillance et le contrôle de réseau d'un système de communication cellulaire,
le dispositif de gestion de réseau (NMCᵢ) étant conçu pour au moins une relation gestionnaire-agent entre le dispositif de gestion de réseau (NMCᵢ) d'un niveau de gestion de réseau (NM LEVEL) et un dispositif de réseau (OMCᵢ) comme agent d'un plan de gestion d'élément (EM LEVEL),
**caractérisé en ce que**
des moyens sont prévus pour la transmission d'informations de gestion sous forme de messages d'événement (A, B, C, D, E, F, G, B', C') à tous les dispositifs (OMCᵢ) concernés par un événement et faisant office de gestionnaire d'élément de réseau, du réseau de gestion en utilisant une caractérisation de ressources communes, c'est-à-dire des ressources qui sont gérées dans des régions de réseau voisines par des instances de différentes classes d'objet, et l'interface (NM-EM-IF) entre le gestionnaire (NMCᵢ) et l'agent (OMCᵢ).

11. Dispositif de gestion de réseau (NMCᵢ) selon la revendication 10,
**caractérisé en ce que**
des moyens sont présents pour le stockage d'informations relatives à l'attribution d'un nom symbolique à au moins une instance d'objet correspondante dans la hiérarchie de gestion orientée objet.

12. Système de communication comprenant un réseau de gestion pour la surveillance et le contrôle de réseau d'un système de communication cellulaire,
comprenant comme dispositifs dans différents niveaux de gestion (NM LEVEL, EM LEVEL), aussi bien un dispositif de réseau (OMCᵢ) dans la fonction d'agent selon la revendication 9 qu'un dispositif de gestion de réseau (NMCᵢ) dans la fonction de gestionnaire selon la revendication 10 ou 11.
